# EUROPEAN PATENT APPLICATION

(11) **EP 2 031 182 A2**
(43) Date of publication of application: **04.03.2009**
(21) Application number: 08162439.7
(22) Date of filing: 14.08.2008
(51) Int. Cl.: F01D 5/06

(54) **Turbine rotor apparatus and system**

(30) Priority: 31.08.2007 US 848645
(71) Applicant: General Electric Company, Schenectady, NY 12345 (US)
(72) Inventor: Ganesh, Swami, Clifton Park, NY 12065 (US); Schwant, Robin Carl, Pattersonville, NY 12137 (US); Spiegel, Lyle B., Niskayuna, NY 12309 (US)
(74) Representative: Illingworth-Law, William Illingworth

(57) **Abstract**

A segmented turbine rotor (28) is disclosed. The segmented turbine rotor (28) has a plurality of rows (52) of a plurality of turbine blades (48). At least one rotor segment (30) of a plurality of rotor segments (30) of the segmented turbine rotor (28) includes a ring (36)(38)(40) disposed circumferentially about and having an axis (57) substantially parallel to a central axis (56) of the rotor (28), the ring (36)(38)(40) defining a cavity (45)(46)(47) disposed at a center thereof and having an outer surface (39) supporting at least one row (52) of the plurality of rows (52) of turbine blades (48).

## Description

### BACKGROUND OF THE INVENTION

The present disclosure relates generally to turbines, and particularly to turbine rotors. Current turbine rotors, such as used within steam turbines for example, may be produced from a large monoblock forging as a single large rotor. Alternatively turbine rotors, such as used within gas turbines for example, may include an assembly consisting of several wheels, with each wheel including one row of turbine blades that represent a stage of the turbine. The wheels can be welded or bolted together. These aforementioned turbine rotor designs result in turbine rotors that have high weight and thermal mass. The weight and thermal mass of current rotor designs result in compromised clearance control and extended turbine starting procedures to accommodate changes in rotor temperature and speed. Accordingly, there is a need in the art for a turbine rotor arrangement that overcomes these drawbacks.

### BRIEF DESCRIPTION OF THE INVENTION

One embodiment of the invention includes A segmented turbine rotor. The segmented turbine rotor has a plurality of rows of a plurality of turbine blades. At least one rotor segment of a plurality of rotor segments of the segmented turbine rotor includes a ring disposed circumferentially about and having an axis substantially parallel to a central axis of the rotor, the ring defining a cavity disposed at a center thereof and having an outer surface supporting at least one row of the plurality of rows of turbine blades.

Another embodiment of the invention includes a turbine including an outer frame, a segmented turbine rotor disposed within the outer frame, the segmented turbine rotor including a plurality of rotor segments and a plurality of rows of a plurality of turbine blades in operable communication with the segmented turbine rotor. At least one rotor segment of the plurality of rotor segments includes a ring disposed circumferentially about and having an axis substantially parallel to a central axis of the rotor, thereby defining a cavity disposed at a center of the ring, the ring having an outer surface supporting at least one row of the plurality of rows of turbine blades.

These and other advantages and features will be more readily understood from the following detailed description of preferred embodiments of the invention that is provided in connection with the accompanying drawings.

### BRIEF DESCRIPTION OF THE DRAWINGS

Referring to the exemplary drawings wherein like elements are numbered alike in the accompanying Figures:
Figure 1 depicts a schematic drawing of a turbine in accordance with an embodiment of the invention;
Figures 2, 3, and 4 depict cross sections of a turbine rotor arrangement in accordance with embodiments of the invention; and
Figure 5 depicts a cross section of a turbine rotor segment and turbine blade in accordance with an embodiment of the invention.

### DETAILED DESCRIPTION OF THE INVENTION

An embodiment of the invention provides a segmented rotor for a turbine including welded segments that can include more than one row of turbine blades. The segmented rotor can include one or more rings in conjunction with one or more disks and includes a substantially hollow interior to reduce weight and thermal mass of the segmented rotor as compared to current rotor designs.

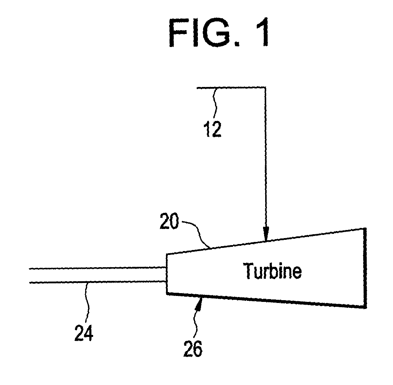

Referring now to Figure 1, a schematic drawing of an embodiment of a turbine 20 that uses a plurality of turbine blades in operable communication with a rotor 24 to convert thermal and kinetic energy to mechanical energy via rotation of the rotor 24 relative to an outer frame 26 is depicted. The turbine 20 may be a gas turbine, which converts thermal and kinetic energy resulting from expansion of combustion gasses 12, for providing mechanical energy to propel a vehicle, such as an airplane, a ship, or a train for example, for generating electricity, or providing mechanical energy for other applications, such as pumping, for example. Alternatively, the turbine 20 may be a steam turbine, which converts thermal and kinetic energy resulting from expansion of high temperature steam 12 to mechanical energy for any variety of uses, such as those described above, for example.

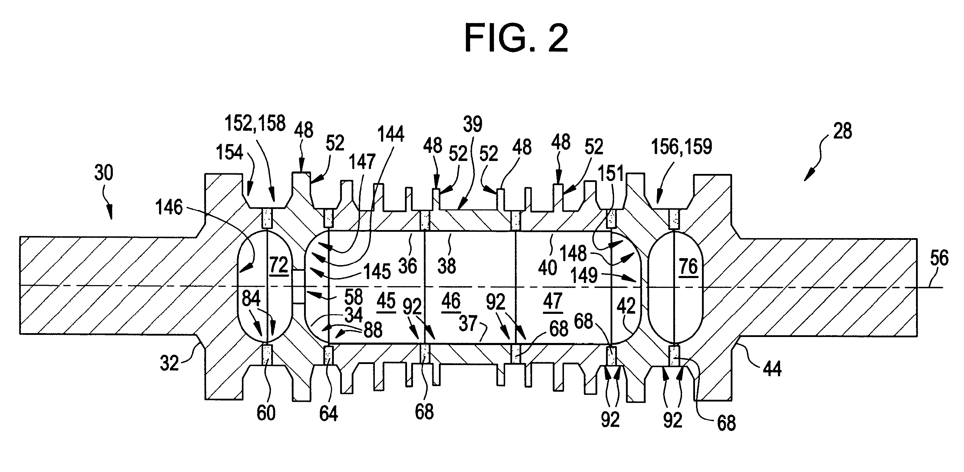

Referring now to Figure 2, a cross section of an embodiment of a segmented rotor 28 is depicted. The segmented rotor 28 includes more than one rotor segment 30, such as rotor segments 32, 34, 36, 38, 40, 42, 44. Turbine blades 48 are arranged upon the segmented rotor 28 in a plurality of rows 52, also known as stages. While only four turbine blades are indicated specifically, it will be appreciated that reference numeral 48 shall refer to all such turbine blades in general. It will be appreciated that while each row 52 of turbine blades 48 is represented by the turbine blade 48 depicted in Figure 2, it includes a plurality of turbine blades 48 that extend circumferentially around a center, or central axis 56 of the segmented rotor 28 in line with the turbine blades 48 depicted. At least one of the rotor segments 30, such as the depicted rotor segments 36, 40, 44, include more than one row 52 of turbine blades 48.

In an embodiment depicted in Figure 2, (for purposes of illustration and not limitation), the segmented rotor 28 includes seven rotor segments 32, 34, 36, 38, 40, 42, 44 upon which twelve rows 52 of turbine blades 48 are disposed.

With reference in particular to rotor segments 34, 42, also herein referred to as "disks" the rotor segments 34, 42 provide a structure having a web 144, 148 and a flange 152, 156, defining a general "T" shape in section, as depicted in Figure 2. In an embodiment, the rotor segments 34, 42 are one piece "disk" rotor segments having the flange 152, 156 integral to the web 144, 148. The web 144, 148 has a first end 145, 149 and a second end 147, 151. The first end 145, 149 of the web 144, 148 extends radially inwardly toward, and is disposed proximate a center 56 of the rotor 24. The second end 147, 151 is located near the flange 152, 156, which is oriented about perpendicular to the web 144, 148 and disposed circumferentially about the center 56. In one embodiment, the disk rotor segments, such as disk rotor segment 34 for example, includes a bore 58, or hole to enable access to the interior of the segmented rotor 28 for inspection and any needed dressing to welds, as will be discussed further below.

A first segment, such as the segment 32 for example, is disposed adjacent to a second segment, such as the segment 34 for example, such the flange 154 of the first segment 32 contacts the flange 152 of the second segment 34. Stated alternatively, the flange 152, 156 is oriented parallel to the center 56, and forms a concentric shell surrounding the center 56.

With reference in particular to rotor segments 36, 38, 40, also herein referred to as "rings", the rotor segments 36, 38, 40 provide a structure that is toroidal, having a generally rectangular shape 37 in cross section, as depicted in Figure 2. The toroidal or ring structure of the rotor segments 36, 38, 40 defines a cavity or center area of open space 45, 46, 47, such that the ring rotor segments 36, 38, 40 are hollow. The generally rectangular shape in cross section of the ring rotor sections 36, 38, 40 is disposed circumferentially about the center 56. In one embodiment, the rotor segments 36, 38, 40 are one piece "ring" rotor segments 36, 38, 40 that are absent any web extending radially inwardly, and thereby form a concentric shell that surrounds and has an axis 57 that is substantially parallel to the central axis 56 of the rotor 24, similar to the flange 152, 156 of the rotor segments 34, 42. In another embodiment the axis 57 of each of the ring rotor segments 36, 38, 40 is coincident with the central axis 56 of the rotor 28. The ring rotor segments, such as ring rotor segments 36, 38, 40 include an outer surface 39 that supports one or more rows 52 of turbine blades 48.

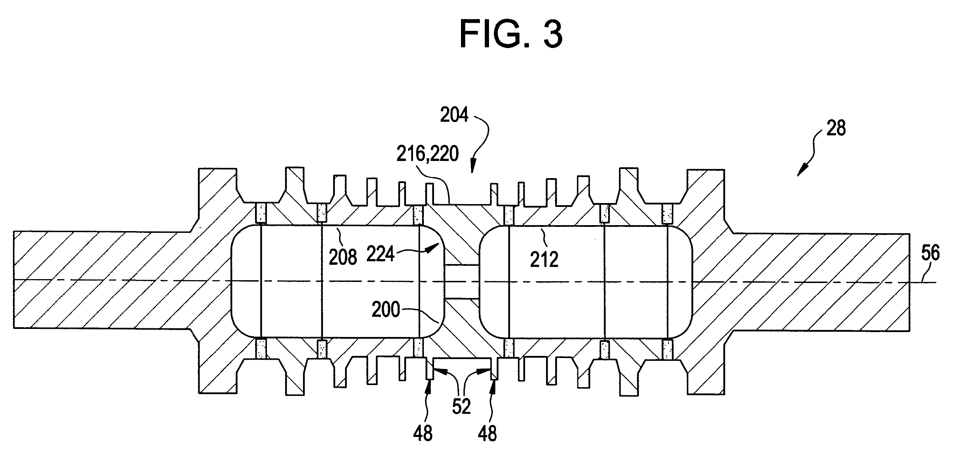

Figure 3 depicts an embodiment of the segmented rotor 28 having an alternate arrangement of disk and ring rotor segments. For example, a disk rotor segment 200 is disposed near a center 204 of the rotor 28, adjacent two ring rotor segments 208, 212. In an embodiment, a flange, such as the flange 216 provides a surface 220 opposite the web 224 that can support more than one row 52 of the turbine blades 48.

While embodiments of the invention has been described having seven rotor segments 30 with a total of twelve rows 52 of turbine blades 48, it will be appreciated that the scope of the invention is not so limited, and that the invention will also apply to segmented rotors 28 that have different numbers of rotor segments 30 upon which different numbers of rows 52 of turbine blades 48 are disposed, as may be required by specific turbine 20 application needs. In an embodiment, the number of segments 30, rows 52 of turbine blades 48 per segment 30, can be optimized based upon stress, manufacturability, cost, and ease of quality inspection. Further, while embodiments have been described with respect to particular arrangements of disk rotor segments relative to ring rotor segments, it will be appreciated that the scope of the invention is not so limited, and that invention will also apply to segmented rotors 28 that utilize different arrangements of disk and ring rotor segments, such as to incorporate an arrangement including having each disk rotor segment adjacent a ring rotor segment, for example.

Referring back now to Figure 2, use of the structure of the rotor segments 32, 34, such as two disk rotor segments disposed adjacent one another, described above including the flange 152, 154 and the web 144,146 provide areas of open space 72, 76, or cavities, defined by and disposed between the web 144, 146 and the flange 152, 154 of the adjacent rotor segments 32, 34. The areas of open space 72, 76, provided by disk rotor segments 32, 34, 42, 44, in addition to the areas of open space 45, 46, 47 provided by the ring rotor segments 36, 38, 40 contribute to a reduction in weight and thermal mass of the segmented rotor 28 as compared to current rotor designs.

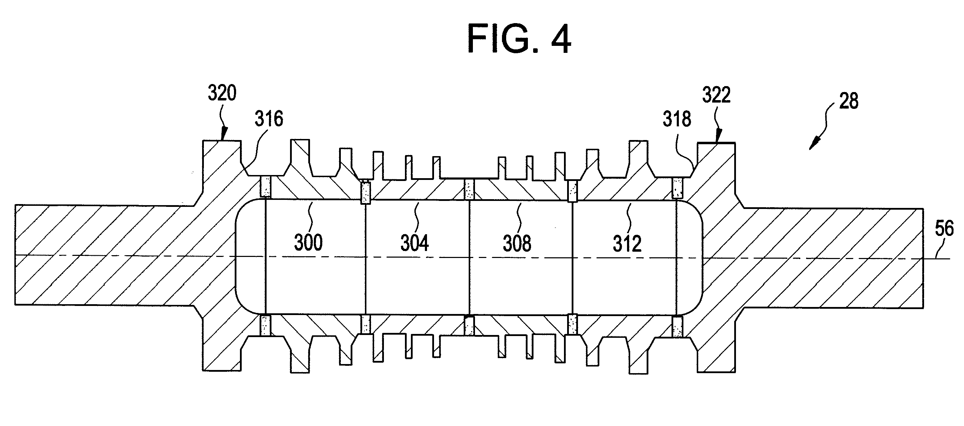

Figure 4 depicts an embodiment of the segmented rotor 28 having an arrangement of ring rotor segments 300, 304, 308, 312, absent any disk rotor segments other than rotor segments 316, 318 disposed proximate ends 320, 322 of the rotor 28.

With reference back to Figure 2, in an exemplary embodiment, the rotor segments 32, 34 are disposed in contact adjacent to one another and are welded together at a weld joint 60. Similarly, rotor segments 34, 36 are welded together at a weld joint 64 disposed between the flange 152 of segment 34, and the ring of segment 36. In similar fashion rotor segments 36, 38, rotor segments 38, 40, rotor segments 40, 42, and rotor segments 42, 44 are welded together at weld joints 68. An embodiment of the segmented rotor 28 will use weld joints 60, 64, 68 that have been produced by a narrow gap Tungsten Inert Gas (TIG) welding process to minimize an amount of weld material required to join the rotor segments 30. It is further contemplated that alternate weld processes, such as electron beam welding, laser welding, and other welding processes may be utilized to join segments 30. Localized pre-welding heat treatment of regions 84, 88, 92 of the rotor segments 30 nearest the weld joints 60, 64, 68 is contemplated for preparing the rotor segments 30 for welding. Further, localized post-welding heat treatment of the regions 84, 88, 92 is contemplated for optimizing the weld properties, such as microstructure, residual stress, and distortion, for example. In one embodiment, two adjacent rotor segments 30 include different, or dissimilar alloy parent materials. Such localized heat treatment is contemplated to be performed in such a way as to produce a controlled thermal gradient to accommodate welding together the rotor segments 30 that include dissimilar alloy parent metals. The localized heat treatment is contemplated to expose each of the rotor segments 30 having different alloy parent materials to different temperatures to optimize the properties of each of the dissimilar alloy parent metals across the weld joint 60, 64, 68.

As compared to current gas turbine 20 rotor designs that utilize several wheels bolted together, with each wheel having one row of blades, the segmented rotor 28 reduces the weight, thermal mass, and complexity associated with the multiple wheels and bolts. Reducing the complexity accordingly reduces a manufacturing cost of the segmented rotor 28. Reducing the weight and thermal mass of the rotor 24 effects the rate of expansion and contraction of the rotor 24. Accordingly, use of the segmented rotor 28, having reduced thermal mass is contemplated to enhance control of the clearances by better matching the rate of expansion of the rotor 24 to the expansion of the adjacent turbine 20 stationary components. Furthermore, reduction of the weight and thermal mass is contemplated to simplify a starting procedure, as the segmented rotor 28 will reach steady-state speeds and temperatures within a shorter time interval. In one embodiment, it is contemplated that a weight of the segmented rotor 28 is 40 percent less than a comparable rotor using current design and construction arrangements.

While current steam turbines 20 may use rotors 24 made from materials that allow machining of one large rotor 24, contemplated use of advanced materials that are better suited to specific operating conditions within turbines 20 will preclude the machining of one large rotor 24, as such materials are often not available in sizes to that correspond to one large rotor 24. Accordingly, use of the rotor segments 30 within a steam turbine is contemplated to facilitate use of a lighter weight rotor 24 that incorporates advanced materials. Examples of advanced materials include super alloys such as alloys 718, 706, Rene 95, 625, Nimonic 263 and other commercial superalloys for example, Martensitic stainless steels, such as M152 (formerly known as Jethete M152), AISI 403, 450 for example, low alloy steels such as NiCrMoV, CrMoV (ASTM A470) for example, and Titanium alloys such as Ti-6-4, Ti6Q2, for example. The foregoing examples are for purposes of illustration, and not limitation.

In an exemplary embodiment, it is contemplated that different rotor segments 30 are made from different materials, with each rotor segment 30 being made from a material that is suited for the particular operating conditions within the turbine 20 to which it is exposed. For example, different rotor segments 30 that are exposed to differing temperatures, payload, or centrifugal loading that results from blade 48 weight, are contemplated to be made from different materials selected for their performance relative to the temperature, payload, or centrifugal loading. Segmented rotors 28 assembled from such rotor segments 30 made from different materials are further contemplated to utilize a differential post-welding heat treatment, with the differential heat treatment optimized to meet the requirements of the different materials.

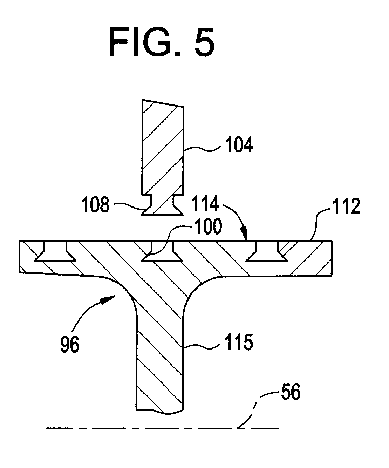

Referring now to Figure 5 another embodiment of a rotor segment 96 is depicted. Dovetail grooves 100 machined into the rotor segment 96 provide for a tangential entry assembly of turbine blades, such as a turbine blade 104 that includes a root 108 having a geometry that matches the geometry of the dovetail groove 100. The dovetail groove 100 is cut into an outer surface 112 of the flange 114.

As disclosed, some embodiments of the invention may include some of the following advantages: a turbine rotor having reduced weight; a turbine rotor having reduced thermal mass; a turbine rotor having a reduced assembly complexity; a turbine having a simplified starting procedure; a turbine rotor having an improved clearance control; a turbine rotor having different materials suited for location-dependent operating conditions within a turbine; and a turbine rotor having a reduced manufacturing cost.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A segmented turbine rotor (28) having a plurality of rows (52) of a plurality of turbine blades (48), at least one rotor segment (30) of a plurality of rotor segments (30) of the segmented turbine rotor (28) comprising:
a ring (36)(38)(40) disposed circumferentially about and having an axis (57) substantially parallel to a central axis (56) of the rotor (28), the ring (36)(38)(40) defining a cavity (45)(46)(47) disposed at a center thereof and having an outer surface (39) supporting at least one row (52) of the plurality of rows (52) of turbine blades (48).

2. The segmented turbine rotor (28) of Claim 1, wherein:
the outer surface (39) of the ring (36)(38)(40) supports more than one row (52) of the plurality of rows (52) of turbine blades (48).

3. The segmented turbine rotor (28) of Claim 1 or Claim 2, wherein at least one rotor segment (30) of the plurality of rotor segments (30) comprises:
a web portion (144) having a first end (145) and a second end (147), the first end (145) disposed proximate the central axis (56) of the rotor (28); and
a flange portion (152) integral with the second end (147) of the web portion (144), the flange portion (152) disposed parallel to the central axis (56), thereby defining a cavity (45)(46)(47) disposed between the web portion (144) and the flange portion (152), the flange portion (152) having an outer surface (39) supporting more than one row (52) of the plurality of rows (52) of the plurality of turbine blades (48).

4. The segmented turbine rotor (28) of any one of the preceding Claims, wherein:
a first segment (34) of the plurality of rotor segments (30) is disposed adjacent to and in contact with a second segment (36) of the plurality of rotor segments (30).

5. The segmented turbine rotor (28) of Claim 4, further comprising:
a weld joint (64) disposed between the first segment (34) and the second segment (36).

6. The segmented turbine rotor (28) of Claim 5, wherein the first segment (34) and the second segment (36) comprise different materials.

7. The segmented turbine rotor (28) of any one of the preceding Claims, wherein at least one of the plurality of rotor segments (30) further comprises:
more than one row (52) of a plurality of dovetail grooves (100) in the outer surface (39), a turbine blade (104) of the plurality of turbine blades (48) being retained by each dovetail groove (100) of the plurality of dovetail grooves (100).

8. The segmented turbine rotor of any one of the preceding Claims, wherein at least one rotor segment of the plurality of rotor segments is made from at least one of:
a super alloy;
a martensitic stainless steel;
a low alloy steel, and
a titanium alloy.

9. A turbine (20) comprising:
an outer frame (26);
a segmented turbine rotor (28) disposed within the outer frame (26), the segmented turbine rotor (28) comprising a plurality of rotor segments (30);
a plurality of rows (52) of a plurality of turbine blades (48) in operable communication with the segmented turbine rotor (28); and
at least one rotor segment (30) of the plurality of rotor segments (30) comprising:
a ring (36)(38)(40) disposed circumferentially about and having an axis (57) substantially parallel to a central axis (56) of the rotor (28), thereby defining a cavity (45)(46)(47) disposed at a center of the ring (36)(38)(40), the ring (36)(38)(40) having an outer surface (39) supporting at least one row (52) of the plurality of rows (52) of turbine blades (48).

10. The turbine (20) of Claim 9, wherein:
the outer surface (39) of the ring (36)(38)(40) supports more than one row (52) of the plurality of rows (52) of turbine blades (48).

11. The turbine (20) of Claim 9 or Claim 10, wherein:
a first segment (34) of the plurality of rotor segments (30) is disposed adjacent to and in contact with a second segment (36) of the plurality of rotor segments (30); and
the segmented turbine rotor (28) further comprises a weld joint (64) disposed between the first segment (34) and the second segment (36).

12. The turbine of any one of Claims 9 to 11, wherein at least one rotor segment of the plurality of rotor segments comprises:
a web portion having a first end and a second end, the first end disposed proximate the central axis of the rotor; and
a flange portion integral with the second end of the web portion, the flange portion disposed parallel to the central axis, thereby defining a cavity disposed between the web portion and the flange portion, the flange portion having an outer surface supporting more than one row of the plurality of rows of the plurality of turbine blades.

13. The turbine of any one of Claims 9 to 12, wherein at least one of the plurality of rotor segments further comprises:
more than one row of a plurality of dovetail grooves in the outer surface, a turbine blade of the plurality of turbine blades being retained by each dovetail groove of the plurality of dovetail grooves.

14. The turbine of any one of Claims 9 to 13, wherein at least one rotor segment of the plurality of rotor segments is made from at least one of:
a super alloy;
a martensitic stainless steel;
a low alloy steel, and
a titanium alloy.

15. The turbine of any one of Claims 9 to 14, wherein:
the turbine is one of a gas turbine and a steam turbine.
